(19) **Europäisches Patentamt**

**European Patent Office**

**Office européen des brevets**

(11) Veröffentlichungsnummer: **0 437 221 A2**

(12) # EUROPÄISCHE PATENTANMELDUNG

(21) Anmeldenummer: **91100133.7**

(22) Anmeldetag: **04.01.91**

(51) Int. Cl.5: **B01D 53/04, B01J 20/34**

(30) Priorität: **10.01.90 DE 4000499**

(43) Veröffentlichungstag der Anmeldung:
**17.07.91 Patentblatt 91/29**

(84) Benannte Vertragsstaaten:
**CH DE FR GB LI NL**

(71) Anmelder: **SCHULZ U. BERGER LUFT- UND VERFAHRENSTECHNIK GmbH**
**Wilhelmstrasse 82**
**W-6838 Reilingen(DE)**

(72) Erfinder: **Schreiner, Hermann, Prof. Dipl.-Ing.**
**Am Pfaffenrain**
**W-6918 Neckarsteinach(DE)**
Erfinder: **Barnstedt, Dietrich, Dipl.-Ing.**
**Talweg 115**
**W-7600 Offenburg(DE)**

(54) **Emissionsfreier Desorptionsprozess.**

(57) Es wird ein Verfahren zur emissionsfreien Regenerierung beladener Adsorptionsmittel beschrieben.

Dies wird dadurch bewirkt, daß ein geschlosssener Gaskreislauf aufrechterhalten wird, der bei erhöhter Temperatur und Unterdruck durch das zu desorbierende Adsorptionsmittel geleitet wird und der bei Überdruck und tiefer Temperatur durch einen Kondensator und anschließend durch einen beladenen weiteren Hilfsadsorber geleitet wird und dann erneut dem zu desorbierenden Adsorptionsmittel zugeführt wird und daß dieser Vorgang sich wiederholt.

*Fig. 1*

## EMISSIONSFREIER DESORPTIONSPROZESS

In der Technik gibt es viele Prozesse, bei denen aus einem Gas mittels eines festen Adsorptionsmittels ein Stoff abgetrennt wird. Als Adsorptionsmittel, kurz Adsorbentien genannt, werden meist hochporöse körnige Stoffe eingesetzt wie Aktivkohle, Silikagel oder sogenannte Molekularsiebe.

Die aus dem Gas abzutrennende Substanz kann entweder ein Wertstoff als zu gewinnendes Produkt sein, oder aber ein sogenannter "Schadstoff", der nicht im Abgas in die Atmosphäre abgelassen werden darf wegen gesundheits-oder umweltschädigender Wirkung. Hierfür werden seit Jahrzehnten schärfer werdende Emissionsgrenzwerte festgelegt, um die immer deutlicher werdenden Umweltbelastungen zu verringern. Besonders in diesem Anwendungsgebiet erfüllen einige Adsorbentien wichtige Funktionen, indem sie nicht nur die Abluft reinigen, sondern gleichzeitig die Rückgewinnung der Schadstoffe im sogenannten Recycling ermöglichen, da die meisten dieser Schadstoffe als Hilfsstoffe in den betreffenden Prozessen gebraucht werden. Dieses Recycling ist bei einigen anderen Abluftreinigungsverfahren, wie beispielsweise thermischer oder katalytischer Verbrennung nicht möglich.

Nun ist aber auch bei der adsorptiven Abluftreinigung gerade dieser Rückgewinnungsprozeß für viele Substanzen noch nicht befriedigend gelöst. Zwar ist der eigentliche Adsorptionsprozeß, d.h. die Übertragung einer Substanz aus dem Gas auf ein frisches Adsorbens meistens verhältnismäßig einfach. Es braucht nur ein Adsorbens-Filter in den Gasstrom eingeschaltet zu werden, welches dann allerdings bei zunehmender Beladung mit der Substanz - im Folgenden der Klarheit halber immer als "Desorbat" bezeichnet, welches meist ein Lösungsmittels ist - in der Reinigungswirkung abnimmt. Schon lange vor Erreichen der möglichen Beladung muß ein solches einfaches Filter umgeschaltet werden, da im Austrittsgas durch sogenannten "Durchbruch" der zulässige Emissionsgrenzwert überschritten wird. Nach diesem einfachen Adsorptionsprozeß muß nun das beladene Adsorbens wieder regeneriert werden, um wieder eingesetzt werden zu können. In machen Fällen ist diese Regenerierung - nachfolgend im Gegensatz zur Adsorption als Desorption bezeichnet - technisch nicht möglich und wird durch eine Verbrennung des beladenen Adsorbens ersetzt. Dies hat natürlich negative wirtschaftliche und umweltbelastende Auswirkungen.

Daher ist man bemüht, die Desorptionstechnik zu verbessern, da die Desorption der Schritt ist, der viel Energie- sowie Apparate- und Bedienungsaufwand erfordert im Gegensatz zur vorherigen Adsorption. Allerdings ergibt sich aus der Literatur (1 bis 7 und etwa 150 Artikel aus Fachzeitschriften), daß außer theoretischen Betrachtungen zur Physik der Desorption sehr wenig technisch brauchbare Angaben über Desorptionsverfahren zu finden sind. Am häufigsten wird bisher die Wasserdampf-Desorption angewandt, die aber in vielen Fällen schwere Nachteile hat, nämlich:

Je nach Löslichkeit und Aufarbeitung des Desorbates entstehen schwere Abwasserprobleme, womit die Umweltbelastung aus der Luft ins Wasser verlagert wird. Auch entstehen in Anwesenheit von Wasser Korrosionsprobleme, die bei trockenen Verfahren nicht auftreten. Ferner muß nach der Dampfdesorption das feuchte Adsorbens vor dem erneuten Einsatz getrocknet werden, was Energie und zusätzliche Stillstandszeit erfordert.

Weiterer Energieverbrauch entsteht bei Wasserdampf-Desorption in der oft teuren Destillation der meist verdünnten wässrigen Desorbate. Über die "trockenen" Desorptionsverfahren sind in der Literatur nur andeutungsweise Angaben zu finden, indem entweder von "Temperatur-Wechsel" oder von "Druckwechsel" gesprochen wird ohne nähere Betrachtung der dabei entstehenden Umweltbelastungen. Denn für beide Verfahren wird einfach angenommen, daß bei der Desorption ein Gasstrom entweder bei höherer Temperatur oder bei tieferem Druck als bei der vorhergehenden Beladung des Adsorbens - d.h. bei der Adsorption - durch das Absorbens-Bett geleitet und anschließend mindestens teilweise als Abgas abgelassen wird.

Mit einem solchen Verfahren sind aber die durch die mit Recht in der letzten Zeit deutlich verschärften Abgasvorschriften z.B. der TA Luft entstandenen Abgasreinheiten nicht mehr zu erzielen. Daher wird oft der Ausweg gewählt, mindestens am Ende der Desorption mit soviel Gas durch das Adsorbens zu spülen, daß dabei zwar wegen der großen Gasmenge der Emissionsgrenzwert unterschritten, aber doch gleichzeitig eine mehr oder weniger große Schadstoffmenge in die Atmosphäre emittiert wird.

Durch eine solche Verfahrensweise wird mindestens ein Teil der vorherigen Bemühungen zur Abluftreinigung wieder illusorisch gemacht. So heißt es z. B. in dem modernen Standardwerk von Ruthven (5) betr. einer solchen Anwendung von Spülgas, daß ..." ferner das Desorbat normal nur in sehr kleinen Konzentrationen im Spülgas enthalten ist, so daß diese Methode normalerweise nicht angewandt würde, wenn das Desorbat zurückgewonnen werden soll".

Druck-Wechsel- oder Temperatur-Wechsel-Desorption wird in dem neuesten Werk von Kast (5) auf nur 2 bis 3 Seiten beschrieben. Auch hier ist allen beschriebenen Verfahren gemeinsam, daß ein mit Schadstoff beladener Abgasstrom in Kauf genommen wird.

In anderen Anwendungsfällen wird auf die Regeneration überhaupt verzichtet. So heißt es in dem ACHEMA-Bericht "Luftreinhaltung" (8) betreffend die Anwendung von leicht austauschbaren direkt in die Abluftleitung angeschlossene Aktivkohle-Fässer wörtlich: "Regeneration ist nicht vorgesehen. Die Kohle kann jedoch ausgeschüttet und durch frische ersetzt werden. Die verbrauchte Kohle kann verbrannt deponiert oder evtl. in einer Zentralanlage desorbiert werden".

Nach welchen Verfahren und wie eine solche Zentralanlage arbeiten soll, wird allerdings nicht einmal angedeutet.

Das nachfolgend beschriebene neue Desorptionsverfahren wurde aber gerade mit dem Ziel einer zentralen Desorptionsanlage entwickelt, in welcher solche austauschbare Adsorbens-Behälter regeneriert werden sollen.

Bei der Frage, ob der für die Desorption erforderliche Energie-Eintrag mittels Wasserdampf oder mit heißem Inertgas durchgeführt werden sollte, wurde die "Vakuumspülgasdesorption" gewählt, um dadurch einerseits Abwasserprobleme und Korrosion in feuchten Apparaten zu vermeiden, und andererseits auch, weil mit Inertgas (Stickstoff) leichter auf beladene Adsorptionsbehälter unterschiedlicher Herkunft und mit unterschiedlichen Beladungsstoffen umgeschaltet werden kann. Dabei war aus der Literatur keine Information über mögliche Verfahren des angestrebten emissionsfreien Desorbierens zu erhalten. Es wurde bei der Erfindung ein geschlossenen Gaskreislauf gewählt, in welchem das Kreislaufgas einerseits die Funktion hat, die Desorptionswärme an das Adsorbens zu liefern und andererseits den desorbierten Dampf - meistens Lösungsmittel - an die Kühlflächen zwecks Kondensation zu transportieren. Dabei ergab sich ein überraschend starker Effekt von Unterdruck auf der heißen Desorptionsseite, der dadurch erhöht werden konnte, daß der Unterdruck (Vakuum) nicht durch Ausschleusen von Gas aus der Anlage sondern durch Verlagern aus dem Desorptionsteil in den Kondensationsteil der Anlage erzeugt wurde. Dabei wird gleichzeitig mit dem Unterdruck im Desorptionsbehälter ein Überdruck im Kondensator erzeugt. Befinden sich etwa annähernd gleiche Volumen im Desorptionsteil und im Kondensationsteil, also je 50 % der Gesamtgasfüllung bei Normaldruck in der ganzen Anlage, so ergibt beispielsweise ein Druck von 0,1 bar absolut im Desorptionsteil folgende Verhältnisse:

In diesem Teil befinden sich noch 5 % der ursprünglichen Gesamt-Gasfüllung und 95 % im Kondensationsteil.

Dies bedeutet, daß im Gaskreislauf der Lösungsmittelteildruck von der Desorption bis zur Kondensation um den Faktor 95 : 5 = 19 erhöht und damit die Kondensation ermöglicht wird, ohne besonders tiefe Kühltemperatur zu erfordern.

Für Dämpfe mit nicht zu tiefer Siede- bzw. Kondensations-Temperatur kann mit diesem Kreislaufverfahren ein ausreichend reines Gas durch Kondensation erreicht werden, welches in der Lage ist, das beladene Adsorptionsmittel soweit zu regenerieren, daß dasselbe danach wieder für eine gute Abgas-Reinigung eingesetzt werden kann. Dabei ist die Anwendung von Kälteanlagen bis zu Kondensationstemperaturen von etwa -20 bis ca. -50 Grad C noch wirtschaftlich, wird aber bei noch tieferen Temperaturen zu kostspielig.

Hier erweist sich nun das erfindungsgemäße Verfahren als überraschend gut, da auf der kalten Druckseite des Gaskreislaufes nach der Kühlung und Kondensation die weitergehende Reinigung des Kreislaufgases durch Adsorption an einem schon relativ hochbeladenem Hilfsadsorber bewirkt wird. Aufgrund der an dieser Stelle des Gaskreislaufes herrschenden für die Adsorption günstigen Temperatur- und Druckverhältnisse ist es möglich, in diesem Hilfsadsorber sehr hohe Beladungen zu erzielen, die andererseits wieder bei hoher Temperatur und unter Vakuum mit bedeutend kleinerem Energieaufwand desorbiert und danach kondensiert werden können, als mit Tieftemperatur-Kondensation möglich wäre.

So war es erfindungsgemäß möglich, einen schon für die Abgasreinigung benutzten und daher mit Lösungsmittel beladenen Adsorptionsbehälter als Hilfsadsorber für die Gasreinigung bei der Regenerierung von vier weiteren beladenen Adsorptionsmittelbehältern einzusetzen. Dabei wird das aus diesen vier Behältern ausgetriebene Lösungsmittel überwiegend auf dem einen kalten Hilfsadsorber adsorbiert, wodurch dessen Beladung auf etwa das Dreifache des Anfangswertes gesteigert werden kann.

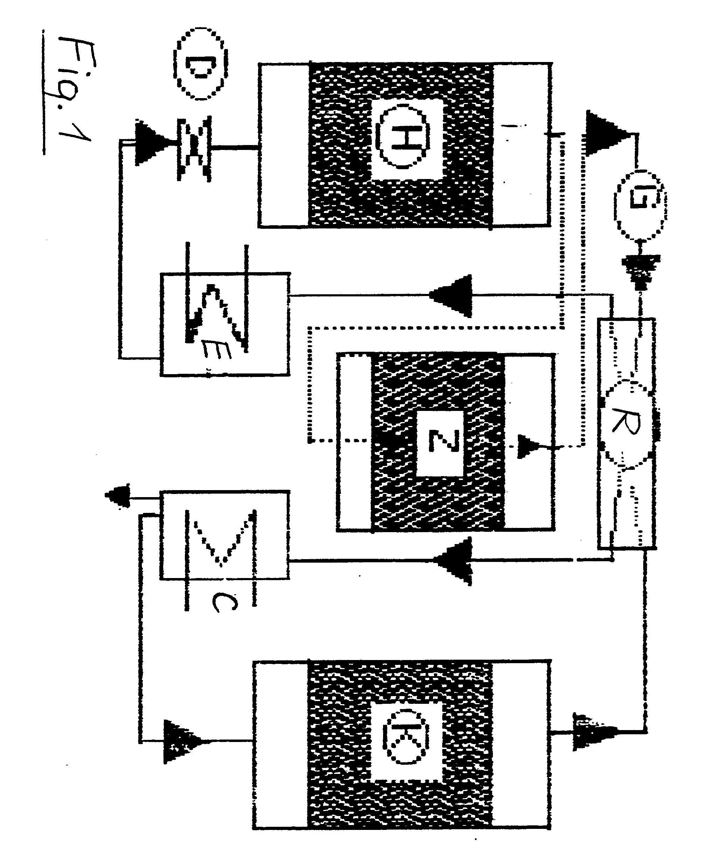

Wenn dieser derart hoch beladene Hilfsadsorber dann auf der heißen Vakuumseite in den Gaskreislauf eingeschaltet wird, ergeben sich so hohe Lösungsmittelgehalte im Gas, daß das Auskondensieren und damit das Recycling bei mäßig tiefen Temperaturen total möglich ist. Diese Wechselschaltung ist in Fig. 1 dargestellt: Die Pfeile in Fig. 1 bedeuten Strömungsrichtungen.

Ein Austauschbehälter H enthält das zu regenerierende Adsorptionsmittel, welches mit heißem Kreislaufgas bei niedrigem Druck (z.B. 0,1 bar) durchströmt wird. Das nach Durchströmen des Austauschbehälters H mit Desorbat angereicherte Kreislaufgas wird von einem Gebläse G in ein zwischen dem Gebläse G und einem Drosselorgan D begrenztes Druckteil gedrückt und dann über das Drosselorgan D in den von dem Drosselorgan D und dem Gebläse G begrenzten Unterdruckteil entspannt. Der Gaskreislauf geht über einen Wärme-Rekuperator R, der unter Wärmerückgewinnung den Gasstrom vorkühlt, über einen Kühler und Kondensator C, in welchem bis zum Taupunkt gekühlt wird, in einen Hilfsadsorber K, in dem das Kreislaufgas durch Adsorbieren seine Restbeladung fast völlig abgibt. Anschließend geht das Kreislaufgas über den eine Vorwärmung bewirkenden Wärme-Rekuperator R zu einem Erhitzer E, danach entspannt sich das erhitzte reine Kreislaufgas in dem Niederdruckraum, d.h. zum zu regenerierenden Behälter H. Diesem nachgeschaltet ist ein Zwischenbehälter Z, der z. B. vorher als Hilfsadsorber K geschaltet war. In dem anfangs hochbeladenem Zwischenbehälter Z wird die Beladung des Kreislaufgases weiter erhöht, wodurch die anschließende Kondensation im Kühler und Kondensator C mit mäßig tiefer Temperatur erfolgen kann. Das Kondensat kann dann abgenommen und "recyclt" werden.

Die in Fig. 1 dargestellte Schaltung kann auf verschiedene Weise variiert werden:
Entweder tauschen, wie oben erläutert, die Behälter K und Z regelmäßig ihre Funktionen, während an die Stelle des zu regenerierenden Behälters H immer wieder ein neuer beladener Austauschbehälter tritt. Insofern ist das gesamte Verfahren besonders geeignet für eine "zentrale Regenerierung", in der austauschbare, transportable Adsorptionsmittelbehälter immer wieder an die Stelle des Behälters H treten.

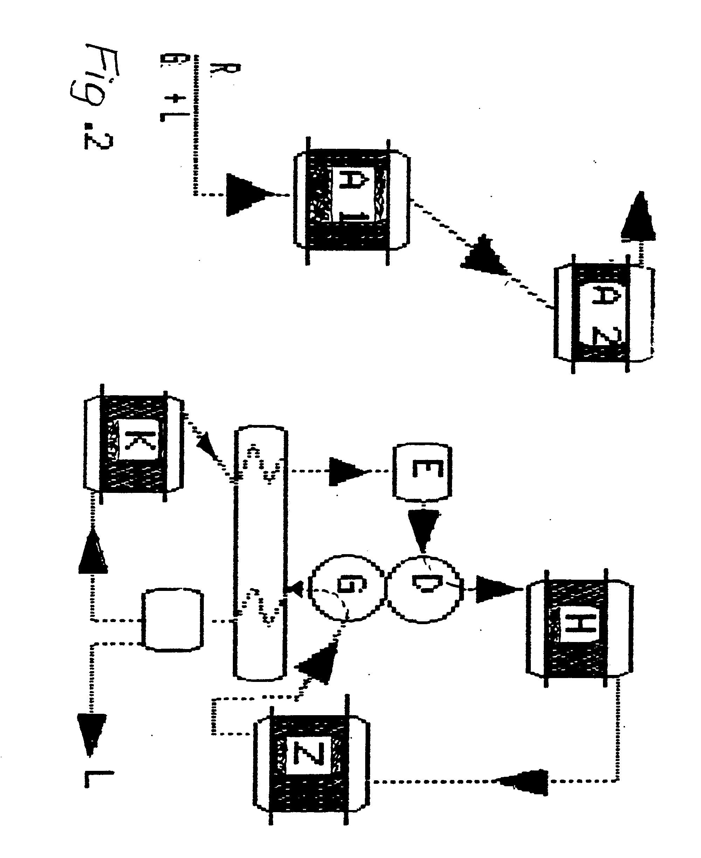

Die Funktionswechsel in einer solchen Anlage können aber auch derart durchgeführt werden, daß ein frisch eintreffender beladener Adsorptionsmittelbehälter zu allererst die Funktion des Behälters K übernimmt, um danach die Funktion Z und dann erst die Funktion H gemäß Fig. 1 zu übernehmen. Andererseits kann die Schaltung gemäß Fig. 1 aber auch sehr günstig für eine große stationäre Abgas-Reinigungsanlage mit unbeweglichen Adsorptionsmittelbehältern angewandt werden, besonders mit Serien-Schaltung von Abgasreinigungsbehältern gemäß Fig. 2:
Dabei sind parallel zu der in Fig. 1 dargestellten 3-stufigen Desorptionsanlage zwei in Serie geschaltete Adsorptionsbehälter A1 und A2 geschaltet, welche die Abgas-Reinigung besorgen, während gleichzeitig der Adsorptionsmittelbehälter H im geschlossenen Gaskreislauf regeneriert wird.

Dabei vertauschen die Behälter A1 und A2 mit H regelmäßig die Funktionen derart, daß immer zwei von diesen Behältern für die Abgas-Reinigung fungieren, während der dritte regeneriert wird. Im Beispiel der Fig.2 vertauschen die Behälter A1 und H dann ihre Funktionen, wenn der Behälter H vollständig regeneriert und gleichzeitig der Behälter A1 vollständig mit Lösungsmittel beladen ist. Der Funktionswechsel geschieht, indem Behälter A2 - der zu diesem Zeitpunkt etwa zu ein Viertel bis zur Hälfte beladen ist - an die Stelle des Behälters A1 und Behälter H an die Stelle von A2 tritt, während A1 die Regenerierposition H einnimmt. Durch das Hintereinanderschalten von immer zwei Adsorptionsbehältern A1 und A2 wird erreicht, daß das Umschalten auf Regenerierung immer erst dann erforderlich wird, wenn der Behälter A1 (in Fig. 2) zwar schon weit über Durchbruch bzw. total beladen ist, aber mittels des Behälters A2 immer noch reines Abgas erreicht wird. Dies hat zur Folge, daß der zur Regenerierung umzuschaltende Behälter A1 zu ca. 90 % und mehr der möglichen Gleichgewichtsbeladung beladen ist, während bei einstufiger Adsorption bei Durchbruch meist nur 30 bis 40 % dieses Wertes erreicht sind. Durch die bei der erfindungsgemäßen Schaltung erreichte höhere Beladung wird die pro Behälter erforderliche Adsorptionsmittel-Masse entsprechend verringert, was besonders für den Transport von Austauschbehältern zu und von einer zentralen Desorption aber auch für die Energie- und Investitionskosten eine beträchtliche Kostensenkung bedeutet.

Denn im Vergleich zu herkömmlichen Wechsel-Adsorptions/Desorptions-Anlagen mit meist drei Behältern mit jeweils der Füllung 100 % - d.h. also mit Gesamtfüllung 300% - entsteht mit der erfindungsgemäßen Schaltung mit selbst fünf Behältern mit jeweils nur eta 30 bis 40% eine Gesamt-Füllung von nur 150 bis 200 %. Es ist also nur etwa 1/2 bis 2/3 der Adsorptionsmittelmasse im Umlauf. Damit werden die Investitionskosten und wegen der kleineren zu erwärmenden Adsorptionsmittelmassen auch die Energie-Kosten verringert.

Die Hauptwirkung des erfindungsgemäßen Verfahrens besteht aber in der fast totalen Vermeidung von Emissionen bei der Desorption verbunden mit totalem Recycling der Lösungsmittel oder Schadstoffe auch in solchen Fällen, in denen entsprechend dem obigen Zitat bisher "Regeneration nicht vorgesehen" bzw. technisch bisher ohne überwiegende Emission nicht möglich ist.

In diesem Zusammenhang ist eine besonders günstige Anwendung zu erwähnen, nämlich die Reinigung von mit Lösungsmitteln verschmutzten Böden durch Durchsaugen von Luft und anschließende Abluftreinigung mittels Adsorption. Weil dabei naturgemäß einerseits die abgesaugten Lösungsmittel praktisch nicht wasserlöslich sind und andererseits die Abluft mit Wasserdampf wegen der Bodenfeuchtigkeit annähernd gesättigt ist, entsteht bei herkömmlichen Verfahren das Problem der Vereisung bei tiefen Temperaturen, was das Auskondensieren niedrigsiedender Lösungsmittel unmöglich macht. Mit dem erfindungsgemäßen Verfahren wird das Auskondensieren von Wasser z. B. im Kühler K und Kondensator C gemäß Fig.1 bei Temperaturen über dem Gefrierpunkt ermöglicht, während die Lösungsmitteldämpfe im dahinter geschalteten kalten Hilfsadsorber K abgeschieden werden.

In diesem Anwendungsfall wurde eine emissionsfreie Regenerierung erst mit dem erfindungsgemäßen Verfahren möglich.

Im Zusammenhang mit Fig. 1 wurde der mögliche Einsatz eines neu eintreffenden beladenen Adsorptionsmittelbehälters an die Stelle des Hilfsadsorbers K, von dort nach Z und am Ende nach H zur Desorption beschrieben. Dieser Wechsel könnte auch bei dem Ausführungsbeispiel der Fig. 2 eingesetzt werden, wodurch dann folgender Verlauf zustande kommt:
beladener Behälter A 1 nach K, danach nach Z, danach nach H und danach nach A 2.

Literatur:

(1)   Brauer H. :Air Pollution Control Equipment, Berlin 1981
(2)   TA Luft: (Bundesministerium des Innern 1986)
(3)   VDI-Richtlinie 2280, VDI 1977
(4)   Ruthven D.M.: Principles of Adsorption and Adsorption Processes, 1984
(5)   Kast U.: Adsorption, Weinheim 1987
(6)   Coulson & Richardson: Chemical Engineering, Vol. III, 1982
(7)   Sattler K.: Thermische Trennverfahren, Weinheim 1987
(8)   Börger G.G.: Chem.-Ing.Techn. 60 (1988) Nr. 11, S. 884-886

**Patentansprüche**

1. Verfahren zur emissionsfreien Regenerierung beladener Adsorptionsmittel, dadurch gekennzeichnet, daß ein geschlossener Gaskreislauf aufrechterhalten wird, der bei erhöhter Temperatur und Unterdruck durch das zu desorbierende Adsorptionsmittel geleitet wird und der bei Überdruck und tiefer Temperatur durch einen Kondensator und anschließend durch einen beladenen weiteren Hilfsadsorber geleitet wird und dann erneut dem zu desorbierenden Adsorptionsmittel zugeführt wird und daß dieser Vorgang sich wiederholt.

2. Verfahren nach Anspruch 1), dadurch gekennzeichnet, daß das vom zu desorbierenden Absorptionsmittel kommenden Gas bei erhöhter Temperatur und Unterdruck durch ein beladenes drittes Adsorptionsmittel geleitet wird.

3. Verfahren nach Anspruch 2, dadurch gekennzeichnet, daß das dritte Adsorptionsmittel vorher als weiterer Hilfsadsorber benutzt wurde.

4. Verfahren nach einem der Ansprüche 1 bis 3, dadurch gekennzeichnet, daß die Reinigung des Kreislaufgases im kalten Überdruckteil durch einen später zu regenerierenden Hilfsadsorber bewirkt wird.

5. Verfahren nach einem der Ansprüche 1 - 4, dadurch gekennzeichnet, daß das Druckverhältnis zwischen Überdruckteil und Unterdruckteil des Gaskreislaufes durch Verdrängen von Gas aus dem Unterdruckteil in den Überdruckteil bewirkt wird.

6. Verfahren nach einem der Ansprüche 1 bis 5, dadurch gekennzeichnet, daß mindestens zwei als Abgasreiniger wirkende Adsorptionsbehälter (A1 und A2) derart in einem Umschaltzyklus mit den im Desorptionsgaskreislauf befindlichen Adsorptionsmittel-Behältern (H, Z und K) eingeschaltet werden, daß beim zyklischen Umschalten immer jeweils nur der vordere hochbeladene Adsorptions-Behälter (A1) in den Desorptionskreislauf eintritt und die übrigen Adsorptionsmittelbehälter derart ihre Funktionen in dem Zyklus A2 - A1 - K - Z -H - A2 - A1 - usw. ändern, daß jeder Behälter in diesem Zyklus um eine Funktion weiter nach rechts rückt.

7. Verfahren nach einem der Anspruch 1 - 5, dadurch gekennzeichnet, daß mindestens zwei als Abgasreiniger wirkende Adsorptionsbehälter (A1 und A2) derart in einem Umschaltzyklus mit dem gerade im Desorptionszustand befindlichen Adsorptionsmittelbehälter (H) eingeschaltet sind, daß bei zyklischem Umschalten immer jeweils nur der am längsten eingeschaltete erste Adsorptionsbehälter (A1) in den Desorptionskreislauf eintritt, der zweite Adsorptionsbehälter (A2) an die Stelle des ersten rückt und der desorbierte Adsorptionsmittelbehälter an die Stelle des zweiten Adsorptionsbehälters rückt.

Fig.1

Fig.2